(19) Europäisches Patentamt
European Patent Office
Office européen des brevets

(11) Publication number: 0 193 281 B1

(12) EUROPEAN PATENT SPECIFICATION

(45) Date of publication of patent specification: 11.04.90

(51) Int. Cl.$^5$: C 08 F 4/64, C 08 F 10/00

(21) Application number: 86300576.5

(22) Date of filing: 28.01.86

# (54) Catalyst component for olefin polymerization.

(30) Priority: 28.01.85 JP 12650/85

(43) Date of publication of application:
03.09.86 Bulletin 86/36

(45) Publication of the grant of the patent:
11.04.90 Bulletin 90/15

(84) Designated Contracting States:
BE DE FR GB IT NL SE

(56) References cited:
EP-A-0 141 500
EP-A-0 184 347
EP-A-0 188 914
US-A-4 301 029

PATENTS ABSTRACTS OF JAPAN, vol. 7, no. 285 (C-201)1430r, 20th December 1983; & JP-A-58 162 607 (MITSUI TOATSU KAGAKU K.K.) 27-09-1983

(73) Proprietor: TOA NENRYO KOGYO KABUSHIKI KAISHA
1-1 Hitotsubashi, 1-Chome Chiyoda-Ku
Tokyo 100 (JP)

(72) Inventor: Yamamoto, Tadashi
1902-5, Ooaza Kamekubo Ooi-machi
Iruma-gun Saitama-ken (JP)
Inventor: Furuhashi, Hiroyuki
1902-5, Ooaza Kamekubo Ooi-machi
Iruma-gun Saitama-ken (JP)
Inventor: Imai, Masafumi
1902-5, Ooaza Kamekubo Ooi-machi
Iruma-gun Saitama-ken (JP)
Inventor: Ueno, Hiroshi
398-1, Ooaza Haneo Namegawa-machi
Hiki-gun Saitama-ken (JP)

(74) Representative: Northover, Robert Frank et al
ESSO Chemical Limited Esso Chemical Research Centre P.O. Box 1
Abingdon Oxfordshire, OX13 6BB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 193 281 B1

## Description

Detailed description of the invention:

Field of industrial application

The present invention relates to a catalyst component for olefin polymerization.

Prior art

It is known that if the titanium halide component of the Ziegler-Natta catalyst is supported on a magnesium halide, the catalytic activity per unit weight of titanium is improved. This technology, however, has a disadvantage in that the catalyst solids contain a large amount of halogen which, in turn, remains in the polymer to cause polymer degradation and equipment corrosion at the time of molding.

On the other hand, there have been proposed some technologies of using a halogen-free magnesium compound to reduce the halogen content in the catalyst solid. However, they are not so effective in reducing the amount of halogen contained in the catalyst solid.

For the same purposes, there have been proposed several catalyst components in which a transition metal is supported on a metal oxide such as silica and alumina. For example, there is disclosed in U.S. 3,993,588 a process for producing a catalyst component by supporting with heat treatment a magnesium halide or magnesium alkoxide on the surface of silica and further reacting it with a titanium compound. There is also disclosed in U.S. 4,335,016, U.S. 4,458,058 and U.S. 4,378,304 a catalyst component formed by reacting a porous support such as silica with an alkylmagnesium compound and then reacting the reaction product with a hydrocarbyloxysilane, or water, or a hydrocarbyl alcohol, and finally reacting the reaction product with a titanium halide compound. These catalyst components are suitable for (co)polymerization of ethylene, but are poor in activity and stereoregularity when used for (co)polymerization of an alphaolefin such as propylene.

There are some known catalyst components for propylene polymerization. For example, Japanese Patent Laid-open No. 162607/1983 discloses a catalyst component formed by contacting a reaction product of a metal oxide and a magnesium dialkoxide with an electron donor compound and a titanium halide compound, and U.S. 4,263,168 and US 4,392,252 disclose a catalyst component formed by contacting a reaction product of an inorganic oxide and a magnesium hydrocarbyl halide with a Lewis base and a titanium tetrachloride. These catalyst components are not necessarily satisfactory in activity and stereoregularity.

Moreover, U.S. 4,301,029 and U.S. 4,431,568 disclose a process for contacting a reaction product of a porous support (such as silica) and an alkylmagnesium compound with an electron donor compound and silicon halide compound prior to the contacting with a titanium compound. The catalyst component produced by this method is not necessarily satisfactory in performance for industrial use.

The present inventors previously found that a catalyst component formed by contacting a magensium alkoxide, a silicon compound having the hydrogen-silicon bond, and electron donor compound, and a titanium compound with one another exhibits a high activity, with the amount of residual halogen in the polymer reduced to a considerably low level (Japanese laid-open specification 198503/1983). However, it is not yet industrially satisfactory. EP 18434 and EP 188914 disclose contacting $SiO_2$ with $Mg(OCH_3)_2$ in methanol solvent with a chlorosilane and $TiCl_4$ but the methanol is not used in the capacity of an electron donor.

Problems to be solved by this invention.

It is an object of the present invention to provide a catalyst component supported on a metal oxide which exhibits high activity and high stereoregularity when used for homopolymerization of an olefin, especially an alpha-olefin such as propylene, and copolymerization of such an olefin with other olefins.

Means to solve the problem

Summary of the invention

The present inventors carried out a series of researches which led to the findings that the object of the invention is achieved with a catalyst component which is formed by contacting a metal oxide, a hydrocarbyloxy group-containing magnesium compound, a silicon compound having the hydrogen-silicon bond, an electron donor compound, and a titanium compound with one another. The present invention was completed based on these findings.

Accordingly, the gist of the present invention resides in a supported titanium-containing catalyst component obtained by contacting (A) a metal oxide, (B) a magnesium hydrocarbyloxide, represented by the formula

$$Mg(OR^1)_p(OR^2)_qR^3{}_rR^4{}_sX_t,$$

wherein $R^1$, $R^2$, $R^3$, and $R^4$ are the same or different alkyl, alkenyl, cycloalkyl, aryl, or aralkyl groups having from 1 to 20 carbon atoms, X is a halogen atom, p or q are greater than 0 and p+q+r+s+t=2, (C) a silicon compound represented by the formula $H_mR_nSiX_r$, wherein R is a hydrocarbon group, R'O—, R'' R'''N— or R''''COO—, wherein R, R', R'', and R''' are hydrocarbon groups and R'''' is a hydrogen atom or a

hydrocarbon group, X is a halogen atom, m is an integer of 1 to 3, $0 \leq r < 4$, and $m+n+r=4$, and contacting with (D) an electron donor compound, and (E) a di, tri or tetravalent titanium compound with one another, the contacting being accomplished either simultaneously or by contacting (A)(B)(C) and (D) first, or by contacting (A)(B) and (C) first followed by contacting with (D) and (E) simultaneously or individually, or by contacting (A) and (B) first following by contacting with (C) and after that contacting with (D) and (E) simultaneously or individually.

Raw materials for preparation of catalyst component

(A) Metal oxide

The metal oxide used in this invention maybe an oxide of a metal selected from the group of elements in Groups II to IV of the Periodic Table. It includes, for example, $B_2O_3$, MgO, $Al_2O_3$, $SiO_2$, CaO, $TiO_2$, ZnO, $ZrO_2$, $SnO_2$, BaO, and $ThO_2$. Preferable among them are $B_2O_3$, MgO, $Al_2O_3$, $SiO_2$, $TiO_2$, and $ZrO_2$. Especially preferable is $SiO_2$. Additional examples of the metal oxides are such complex oxides containing the metal oxides as $SiO_2$—MgO, $SiO_2$—$Al_2O_3$, $SiO_2$—$TiO_2$, $SiO_2$—$V_2O_5$, $SiO_2$—$Cr_2O_3$, and $SiO_2$—$TiO_2$—MgO.

Fundamentally, the above-mentioned metal oxides and complex oxides should preferably be anhydrous. However, they may contain a very small amount of hydroxide which is usually present. In addition, they may contain impurities in such an amount that they do not considerably impair the properties of the metal oxides. The permissible impurities are oxides, carbonates, sulfates, and nitrates such as sodium oxide, potassium oxide, lithium oxide, sodium carbonate, potassium carbonate, calcium carbonate, magnesium carbonate, sodium sulfate, aluminum sulfate, barium sulfate, potassium nitrate, magnesium nitrate, and aluminum nitrate.

Usually the metal oxide is used in the form of powder. The particle size and shape of the powder should be properly adjusted because they affect the form of the resulting olefin polymer. In addition, the metal oxide should preferably be calcined, prior to use, at as high a temperature as possible to remove poisonous substances, and the calcined metal oxide should be isolated from the atmosphere during handling.

(B) Hydrocarbyloxy group-containing magnesium compound

The following are examples of the compounds represented by the formula above.

(1) Magnesium dihydrocarbyloxide represented by $Mg(OR^1)_p(OR^2)_{2-p}$

Examples of this compound are

$Mg(OCH_3)_2$, $Mg(OC_2H_5)_2$, $Mg(OCH_3)(OC_2H_5)$, $Mg(Oi—C_3H_7)_2$, $Mg(OC_3H_7)_2$, $Mg(OH_4H_9)_2$, $Mg(O—iC_4H_9)_2$, $Mg(OC_4H_9)(Oi—C_4H_9)$, $Mg(OC_4H_9)(Osec—C_4H_9)$, $Mg(OC_6H_{13})_2$, $Mg(OC_8H_{17})_2$, $Mg(OC_6H_{11})_2$, $Mg(OC_6H_5)_2$, $Mg(OC_6H_4CH_3)_2$, $Mg(OCH_2C_6H_5)_2$, $Mg[O—2(C_2H_5) \cdot C_6H_{12}]_2$, $Mg(Oi—C_7H_{15})_2$, $Mg(Oi—C_8H_{17})_2$, and $Mg[OC(CH_3)_2C_4H_9]_2$.

These compounds may be commercially obtained or they may be produced by the known method such as reacting metallic magnesium or a dihydrocarbyl magnesium such as diethyl magnesium, butyl ethyl magnesium, dibutyl magnesium, and diphenyl magnesium, with at least one alcohol such as ethanol, butanol, 2-ethylhexanol, and phenol, orthocarboxylate esters such as ethyl orthocarbonate, ethyl orthoformate, phenyl orthoformate, and ethyl orthobenzoate, alkoxyl group-containing silicon compounds such as tetraethoxysilane and phenyltriethoxysilane, alkoxyl group-containing phosphorus compounds such as triethyl phosphite and triphenyl phosphite, and alkoxyl group-containing boron compounds such as triethyl borate and tributyl borate.

The dihydrocarbyl magnesium used for the above-mentioned purpose may be a mixture or complex compound with other organometallic compounds such as triethyl aluminum, triethyl boron, diethyl beryllium, and diethyl zinc.

(2) Hydrocarbyloxymagnesium halide represented by $Mg(OR')_pX_{2-p}$

This compound is obtained by partial halogenation of the above-mentioned magnesium dihydrocarbyloxide with a halogenating agent such as aluminum chloride, silicon tetrachloride, phosphorus pentachloride, phosphorus oxychloride, and thionyl chloride, or by reaction with a magnesium halide such as $MgCl_2$.

Additional examples are those compounds obtained by (a) the reaction of a Grignard compound with or (b) the reaction of metallic magnesium and hydrocarbyl halide with at least one of the above-mentioned alcohols, orthocarboxylate esters, alkoxyl group-containing silicon compounds, alkoxyl group-containing phosphorus compounds, and alkoxyl group-containing boron compounds.

(3) Hydrocarbyloxymagnesium halide represented by $Mg(OR^1)_pR^3_rX_t$ (where $t>0$)

Examples of this compound include ethylethoxymagnesium chloride, ethylphenoxymagnesium chloride, butylethyoxymagnesium chloride, butylhexyloxymagnesium chloride, isobutylisobutoxy-magnesium chloride, and phenylethoxymagnesium bromide. These compounds may be prepared by partial alkoxylation of a Grignard compound with any one of the alcohols, orthocarboxylate esters, or alkoxyl group-containing compounds mentioned in the preceding paragraph (1).

(4) Hydrocarbylmagnesium hydrocarbyloxide represented by

$$Mg(OR^1)_p(OR^2)_qR^3_rR^4_s.$$

(C) Silicon compound

The silicon compound used in this invention is not specifically limited so long as it has the hydrogen-silicon bond. It is a compound represented by the formula $H_mR_nSiX_r$, where R is a hydrocarbon group, $R^1O$— (where $R^1$ is a hydrocarbon group), $R^2R^3N$— (where $R^2$ and $R^3$ are hydrocarbon groups), or $R^4COO$— (where $R^4$ is a hydrogen atom or hydrocarbon group); X is a halogen atom; and m is an integer of 1 to 3, $0 \leq r < 4$, and $m+n+r=4$. (The groups represented by R may be the same or different when n is greater than 1.)

The hydrocarbon groups represented by R, $R^1$, $R^2$, $R^3$, and $R^4$ are $C_1$ to $C_{16}$ alkyl, alkenyl, cycloalkyl, aryl, and aralkyl groups. The alkyl includes methyl, ethyl, propyl, n-butyl, isobutyl, n-hexyl, n-octyl, 2-ethylhexyl, and n-decyl. The alkenyl includes vinyl, allyl, isopropenyl, propenyl, and butenyl. The cycloalkyl includes cyclopentyl and cyclohexyl. The aryl includes phenyl, tolyl, and xylyl. The aralkyl includes benzyl, phenetyl, and phenylpropyl.

Preferable among the above-mentioned hydrocarbon groups are lower alkyl groups such as methyl, ethyl, propyl, isopropyl, n-butyl, isobutyl, and t-butyl, and aryl such as phenyl and tolyl.

X in the above formula may denote chlorine, bromine or iodine. X is preferably a chlorine atom.

Examples of the silicon compound include:

$HSiCl_3$, $H_2SiCl_2$, $H_3SiCl$, $HCH_3SiCl_2$, $HC_2H_5SiCL_2$, $H(t—C_4H_9)SiCl_2$, $HC_6H_5SiCl_2$, $H(CH_3)_2SiCl$, $H(i—C_3H_7)_2SiCl$, $H_2C_2H_5SiCl$, $H_2(n—C_4H_9)SiCl$, $H_2(C_6H_4CH_3)SiCl$, $HSi(CH_3)_3$, $HSiCH_3(OCH_3)_2$, $HSiCH_3(OC_2H_5)_2$, $HSi(OCH_3)_3$, $(C_2H_5)_2SiH_2$, $HSi(CH_3)_2(OC_2H_5)$, $HSi(CH_3)_2[N(CH_3)_2]$, $HSiCH_3(C_2H_5)_2$, $HSiC_2H_5(OC_2H_5)_2$, $HSiCH_3[N(CH_3)_2]_2$, $C_6H_5SiH_3$, $HSi(C_2H_5)_3$, $HSi(OC_2H_5)_3$, $HSi(CH_3)_2[N(C_2H_5)_2]$, $HSi[N(CH_3)_2]_3$, $C_6H_5CH_3SiH_2$, $C_6H_5(CH_3)_2SiH$, $(n—C_3H_7)_3SiH$, $HSiCl(C_6H_5)_2$, $H_2Si(C_6H_5)_2$, $HSi(C_6H_5)_2CH_3$, $(n—C_5H_{11}O)_3SiH$, $HSi(C_6H_5)_3$, and $(n—C_5H_{11})_3SiH$.

Other silicon compounds not covered by the above formula include:

$(ClCH_2CH_2O)_2CH_3SiH$, $HSi(OCH_2CH_2Cl)_3$, $[H(CH_3)_2Si]_2O$, $[H(CH_3)_2Si]_2NH$, $(CH_3)_3SiOSi(CH_3)_2H$, $[H(CH_3)_2Si]_2C_6H_4$, $[H(CH_3)_2SiO]_2Si(CH_3)_2$, $[(CH_3)_3SiO]_2SiHCH_3$, $[(CH_3)_3SiO]_3SiH$, and $[Si(CH_3)(H)O]_5$.

Preferable among the above-mentioned silicon compounds are halogenated silicon compounds in which R is a hydrocarbon, n is an integer of 0 to 2, and r is an integer of 1 to 3. Preferred examples of such compounds are:

$HSiCl_3$, $H_2SiCl_2$, $H_3SiCl$, $HCH_3SiCl_2$, $HC_2H_5SiCl_2$, $H(t—C_4H_9)SiCl_2$, $HC_6H_5SiCl_2$, $H(CH_3)_2SiCl$, $H(i—C_3H_7)_2SiCl$, $H_2C_2H_5SiCl$, $H_2(n—C_4H_9)SiCl$, $H_2(C_6H_4CH_3)SiCl$, and $HSiCl(C_6H_5)_2$.

Particularly preferable are $HSiCl_3$, $HCH_3SiCl_2$, and $H(CH_3)_2SiCl$.

(D) Electron donor compound

The electron donor compound includes carboxylic acids, carboxylic acid anhydrides, carboxylic acid esters, carboxylic acid halides, alcohols, ethers, ketones, amines, amides, nitriles, aldehydes, alcoholates, phosphamides, thioethers, thioesters, carbonic acid esters, and compounds of phosphorus, arsenic, or antimony attached to an organic group through a carbon or oxygen atom. Preferable among them are carboxylic acids, carboxylic acid anhydrides, carboxylic acid esters, carboxylic acid halides, alcohols, and ethers.

Examples of the carboxylic acids include aliphatic monocarboxylic acids such as formic acid, acetic acid, propionic acid, butyric acid, isobutyric acid, valeric acid, caproic acid, pivalic acid, acrylic acid, methacrylic acid, and crotonic acid; aliphatic dicarboxylic acids such as malonic acid, succinic acid, glutaric acid, adipic acid, sebasic acid, maleic acid, and fumaric acid; aliphatic hydroxycarboxylic acids such as tartaric acid; alicyclic carboxylic acids such as cyclohexane monocarboxylic acid, cyclohexene monocarboxylic acid, cis - 1,2 - cyclohexane dicarboxylic acid, and cis - 4 - methylcyclohexene - 1,2 - dicarboxylic acid; aromatic monocarboxylic acids such as benzoic acid, toluic acid, anisic acid, p - tertiary - butylbenzoic acid, naphthoic acid, and cinnamic acid; and aromatic dicarboxylic acids such as phthalic acid, isophthalic acid, terephthalic acid, and naphthalic acid.

The carboxylic acid anhydrides are anhydrides of the above-mentioned carboxylic acids in the form of anhydrides.

The carboxylic acid esters are monoesters and diesters of the above-mentioned carboxylic acids. Their examples include butyl formate, ethyl acetate, butyl butyrate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diethyl maleate, dibutyl maleate, diisobutyl maleate, monomethyl fumarate, diethyl fumarate, diisobutyl fumarate, diethyl tartrate, dibutyl tartrate, diisobutyl tartrate, ethyl cyclohexanecarbonate, methyl benzoate, ethyl benzoate, methyl p-toluylate, ethyl p - tertiary - butylbenzoate, ethyl p-anisate, ethyl alpha-naphthoate, isobutyl alpha-naphthoate, ethyl cinnamate, monomethyl phthalate, dibutyl phthalate, diisobutyl phthalate, dihexyl

phthalate, dioctyl phthalate, di - 2 - ethylhexyl phthalate, diaryl phthalate, diphenyl phthalate, diethyl isophthalate, diisobutyl isophthalate, diethyl terephthalate, dibutyl terephthalate, diethyl naphthalate, and dibutyl naphthalate.

The carboxylic acid halides are halides of the above-mentioned carboxylic acids. Their examples include acetic acid chloride, acetic acid bromide, acetic acid iodide, propionic acid chloride, butyric acid chloride, butyric acid bromide, butyric acid iodide, pivalic acid chloride, pivalic acid bromide, acrylic acid chloride, acrylic acid bromide, acrylic acid iodide, methacrylic acid chloride, methacrylic acid bromide, methacrylic acid iodide, crotonic acid chloride, malonic acid chloride, malonic acid bromide, succinic acid chloride, succinic acid bromide, glutaric acid chloride, glutaric acid bromide, adipic acid chloride, adipic acid bromide, sebasic acid chloride, sebasic acid bromide, maleic acid chloride, maleic acid bromide, fumaric acid chloride, fumaric acid bromide, tartaric acid chloride, tartaric acid bromide, cyclohexane carboxylic acid chloride, cyclohexane carboxylic acid bromide, 1-cyclohexene carboxylic acid chloride, cis - 4 - methylcyclohexene carboxylic acid chloride, cis - 4 - methylcyclohexene carboxylic acid bromide, benzoyl chloride, benzoyl bromide, p-toluic acid chloride, p-toluic acid bromide, p-anisic acid chloride, p-anisic acid bromide, alphanaphthoic acid chloride, cinnamic acid chloride, cinnamic acid bromide, phthalic acid dichloride, phthalic acid dibromide, isophthalic acid dichloride, isophthalic acid dibromide, terephthalic acid dichloride, and naphthalic acid dichloride. Additional useful compounds include dicarboxylic acid monoalkylhalides such as adipic acid monomethylchloride, maleic acid monoethylchloride, and maleic acid monomethylchloride.

The alcohols are those compounds represented by the formula ROH, where R is a $C_1$ to $C_{12}$ alkyl, alkenyl, cycloalkyl, aryl, or aralkyl group. Examples of the alcohols include methanol, ethanol, propanol, isopropanol, butanol, isobutanol, pentanol, hexanol, octanol, 2-ethylhexanol, cyclohexanol, benzyl alcohol, allyl alcohol, phenol, cresol, xylenol, ethylphenol, isopropylphenol, p - tertiarybutylphenol, and n-octylphenol.

The ethers are those compounds represented by the formula ROR′, where R and R′ are $C_1$ to $C_{12}$ alkyl, alkenyl, cycloalkyl, aryl, or aralkyl groups. R and R′ may be the same or different. Examples of the ethers include diethyl ether, diisopropyl ether, dibutyl ether, diisobutyl ether, diisoamyl ether, di - 2 - ethylhexyl ether, diallyl ether, ethylallyl ether, butylallyl ether, diphenyl ether, anisole, and ethylphenyl ether.

(E) Titanium compound

The titanium compound used in this invention is a compound of divalent, trivalent, or tetravalent titanium. Examples of the compound include titanium tetrachloride, titanium tetrabromide, trichloroethoxytitanium, trichlorobutoxytitanium, dichlorodiethyoxytitanium, dichlorodibutoxytitanium, dichlorodiphenoxytitanium, chlorotriethoxytitanium, chlorotributoxytitanium, tetrabutoxytitanium, and titanium trichloride. Preferable among them are tetravalent titanium halides such as titanium tetrachloride, trichloroethoxytitanium, dichlorodibutoxytitanium, and dichlorodiphenoxytitanium. Particularly preferable is titanium tetrachloride.

Preparation of catalyst component

The catalyst component of this invention is obtained by contacting a metal oxide (component A), an alkoxyl group-containing magnesium compound (component B), a silicon compound having the hydrogen-silicon bond (component C), an electron donor compound (component D), and a titanium compound (component E). The contacting of the five components may be accomplished, for example, in the following manners.

(1) Component A and component B are contacted with each other and the resulting contact product is contacted with component C and the resulting contact product is contacted further with component D and component E simultaneously or individually.

(2) Component A, component B, and component C are contacted with one another simultaneously, and the resulting contact product is contacted with component D and component E simultaneously or individually.

(3) Component A, component B, component C, and component D are contacted with one another simultaneously, and the resulting contact product is contacted with component E.

(4) Component A, component B, component C, component D, and component E are contacted with one another simultaneously.

Contacting method (1) is preferable. This method is explained in the following.

Method (1)

(i) Contacting of component A with component B

The contacting of component A with component B is accomplished by mixing and stirring or mechanically copulverizing the two components in the presence or absence of an inert medium. Examples of the inert medium include hydrocarbons such as pentane, hexane, heptane, octane, decane, cyclohexane, benzene, toluene, and xylene; and halogenated hydrocarbons such as 1,2 - dichloroethane, 1,2 - dichloropropane, carbon tetrachloride, butyl chloride, isoamyl chloride, bromobenzene, and chlorotoluene.

It is possible to perform the contacting of component A with component B by synthesizing component B in the presence of component A in the above-mentioned manner.

Usually the contacting of component A with component B is performed at −20°C to 150°C for 0.1 to 100 hours. Where the contacting is accompanied by abrupt heat generation, the components may be mixed little by little at a low temperature in the initial stage, and after the mixing of all the components is complete, the temperature of the mixture may be increased and contacting may be continued. The molar ratio (B/A) of component A and component B in the contacting step is 0.01 to 1.

The contacting by mechanical coupulverization may be accomplished by using a grinder, such as rotary ball mill, vibratory ball mill, and impact mill, which is commonly used to obtain grinds. The copulverization may be accomplished, if necessary, under reduced pressure or in an inert gas atmosphere, in the substantial absence of moisture and oxygen.

(ii) Contacting with component C

The contact product of component A and component B (referred to as contact product (a) hereinafter) is subsequently contacted with component C by mixing and stirring or mechanically copulverizing the two components in the presence or absence of the same inert medium as mentioned above. Before contacting with component C, the contact product (a) may be washed with a proper cleaning agent such as the above-mentioned inert medium.

In the case of mechanical copulverization, the contact temperature is 0 to 200°C and the contact time is 0.5 to 100 hours. In the case of mere stirring, the contact temperature is 0 to 200°C and the contact time is 0.5 to 100 hours. Component C is not limited to one kind; but two or more kinds of component C may be used.

The amount of component C is 0.5 to 10 gram-mol, preferably 1 to 5 gram-mol, per gram-atom of magnesium in contact product (a).

(iii) Contacting with component D and component E

The contact product of contact product (a) and component C (referred to as contact product (b) hereinafter) is subsequently contacted with component D and component E. Before contacting with component D and component E, the contact product (b) may be washed with a proper cleaning agent such as the above-mentioned inert medium.

The contacting of the contact product (b) with component D and component E may be accomplished by (1) contacting it with component D and then contacting the resulting contact product with component E, (2) contacting it with component E and then contacting the resulting contact product with component D, or (3) contacting it with component D and component E simultaneously.

The above-mentioned contacting may be accomplished by mixing and stirring or mechanically copulverizing the contact products and components in the presence or absence of an inert medium. Mixing and stirring in the presence or absence of an inert medium is preferable. Examples of the inert medium are as mentioned above.

The contacting of contact product (b) with component D and component E is usually accomplished at 0 to 200°C for 0.1 to 100 hours in the case of mechanical copulverization, and at 0 to 200°C for 0.5 to 20 hours in the case of mixing and stirring.

The amount of component D is 0.005 to 10 gram-mol, preferably 0.01 to 1 gram-mol, per gram-atom of magnesium in contact product (b). The amount of component E is 0.1 gram-mol or above, preferably 1 to 50 gram-mol, per gram-atom of magnesium in contact product (b).

The contacting of contact product (b) with component E may be performed twice or more, if necessary, in the same manner as mentioned above. In this case, the resulting contact product obtained first may be washed with an inert medium, and then the washed contact product is contacted further with additional fresh component E (and additional medium).

Where the contacting with component E is performed twice or more, the contact product may be contacted with an inert hydrocarbon, a halogenated hydrocarbon, or metal halide compound in the interval between the preceding contact and the succeeding contact.

The inert hydrocarbon that can be used in the contacting step is an aliphatic, alicyclic, or aromatic hydrocarbon. Their examples are n-hexane, methylhexane, dimethylhexane, ethylhexane, ethylmethylpentane, n-heptane, methylheptane, trimethylpentane, dimethylheptane, ethylheptane, trimethylhexane, trimethylheptane, n-octane, methyloctane, dimethyloctane, n-undecane, n-dodecane, n-tridecane, n-tetradecane, n-pentadecane, n-hexadecane, n-octadecane, n-nonadecane, n-eicosane, cyclopentane, cyclohexane, methylcyclopentane, cycloheptane, dimethylcyclopentane, methylcyclohexane, ethylcyclopentane, dimethylcyclohexane, ethylcyclohexane, cyclooctane, indan, n-butylcyclohexane, isobutylcyclohexane, adamantane, benzene, toluene, xylene, ethylbenzene, tetramethylbenzene, n-butylbenzene, isobutylbenzene, propyltoluene, decaline, and tetralin.

The halogenated hydrocarbon that can be used in the contacting step is a mono- or poly-halogen substituted saturated or unsaturated aliphatic, alicyclic, or aromatic hydrocarbon having 1 to 12 carbon atoms. Their examples derived from an aliphatic compound are methyl chloride, methyl bromide, methyl iodide, methylene chloride, methylene bromide, methylene iodide, chloroform, bromoform, iodoform, carbon tetrachloride, carbon tetrabromide, carbon tetraiodide, ethyl chloride, ethyl bromide, ethyl iodide, 1,2 - dichloroethane, 1,2 - dibromoethane, 1,2 - diiodoethane, methylchloroform, methylbromoform, methyliodoform, 1,1,2 - trichloroethylene, 1,1,2 - tribromoethylene, 1,1,2,2 - tetrachloroethylene, penta-

chloroethane, hexachloroethane, hexabromoethane, n-propyl chloride, 1,2 - dichloropropane, hexachloropropylene, octachloropropane, decabromobutane, and chlorinated paraffin. The examples derived from an alicyclic compound are chlorocyclopropane, tetrachlorocyclopentane, hexachloropentadiene, and hexachlorocyclohexane. The examples derived from an aromatic compound are chlorobenzene, bromobenzene, o - dichlorobenzene, p - dichlorobenzene, hexachlorobenzene, hexabromobenzene, benzotrichloride, and p - chlorobenzotrichloride. These compounds may be used individually or in combination with one another.

The metal halide compound is the halide of an element selected from the group of elements in Groups IIIa, IVa, and Va of the Periodic Table (called a metal halide hereinafter). They include the chloride, fluoride, bromide, and iodide of B, Al, Ga, In, Tl, Si, Ge, Sn, Pb, As, Sb, and Bi. Preferable among them are $BCl_3$, $BBr_3$, $AlCl_3$, $AlBr_3$, $AlI_3$, $GaCl_3$, $GaBr_3$, $InCl_3$, $TlCl_3$, $SiCl_4$, $SnCl_4$, $SbCl_5$, and $SbF_5$.

Where the contacting with component E is performed twice or more, the intermediate contact product is contacted, if necessary, with an inert hydrocarbon, halogenated hydrocarbon, or metal halide (called component F hereinafter) in the interval between the preceding contact and the succeeding contact. This contact is performed at 0 to 200°C for 5 minutes to 20 hours, preferably at 20 to 150°C for 10 minutes to 5 hours. Where component F is a liquid substance, it is used in such an amount that contact product (b) is 1 to 1000 g per liter of component F. Where component F is a solid substance, it is preferable to use it in the form of solution. It is used in such an amount that the amount of contact product (b) is 0.01 to 100 g per g of component F.

After the contacting of contact product (b) with component E, the resulting contact product may be contacted further with component F in the same manner as mentioned above.

Catalyst for olefin polymerization

The catalyst component of this invention is combined with an organic compound of a metal in Groups I to III of the Periodic Table, to be made into a catalyst for homopolymerization of an olefin or for copolymerization of an olefin with another olefin.

Organic compound of metal in Groups I to III

An organic compound of lithium, magnesium, calcium, zinc, or aluminum can be used as the organometallic compound. Among tese organometallic compounds, an organoaluminum compound is preferable. The organoaluminum compound that can be used is represented by the formula $R_nAlX_{3-n}$ (where R is an alkyl group or aryl group; X is a halogen atom, alkoxyl group, or hydrogen atom; and n is a number in the range of $1 \leq n \leq 3$). Preferred ones are $C_1$ to $C_{18}$, preferably $C_2$ to $C_6$ alkyl aluminum compounds and mixtures thereof and complex compounds thereof such as trialkyl aluminum, dialkyl aluminum monohalide, monoalkyl aluminum dihalide, alkyl aluminum sesquihalide, dialkyl aluminum monoalkoxide, and dialkyl aluminum monohydride. Their examples include trialkyl aluminum such as trimethyl aluminum, triethyl aluminum, tripropyl aluminum, triisobutyl aluminum, and trihexyl aluminum; dialkyl aluminum monohalide such as dimethyl aluminum chloride, diethyl aluminum chloride, diethyl aluminum bromide, diethyl aluminum iodide, and diisobutyl aluminum chloride; monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide; and dialkyl aluminum hydride such as dimethyl aluminum hydride, diethyl aluminum hydride, dipropyl aluminum hydride, and diisobutyl aluminum hydride.

Preferable among these compounds is trialkyl aluminum, particularly triethyl aluminum and triisobutyl aluminum. The trialkyl aluminum may be used in combination with other organoaluminum compounds such as commercially available diethyl aluminum chloride, ethyl aluminum dichloride, ethyl aluminum sesquichloride, diethyl aluminum ethoxide, and diethyl aluminum hydride, or a mixture thereof or a complex compound thereof.

Another organoaluminum compound that can be used is one in which two or more aluminum atoms are connected through an oxygen atom or nitrogen atom. Examples of such compounds are

$$(C_2H_5)_2AlOAl(C_2H_5)_2,\ (C_4H_9)_2AlOAl(C_4H_9)_2,\ \text{and}\ (C_2H_5)_2Al\underset{\underset{C_2H_5}{|}}{N}Al(C_2H_5)_2.$$

Other organometallic compounds than organoaluminum compounds are diethyl magnesium, ethyl magnesium chloride, diethyl zinc, $LiAl(C_2H_5)_4$, and $LiAl(C_7H_{15})_4$.

The organometallic compound may be used alone or in combination with an electron donor compound.

The electron donor compound may be any compound that is used as component D in the preparation of the above-mentioned catalyst component. The electron donor compound may be an organosilicon compound or a compound that contains a hetero atom such as nitrogen, sulfur, oxygen, and phosphorus.

Examples of the organosilicon compounds include tetramethoxysilane, tetraethoxysilane, tetrabutoxysilane, tetraisobutoxysilane, tetraphenoxysilane, tetra(p - methylphenoxy)silane, tetrabenzyloxysilane, methyltrimethoxysilane, methyltriethoxysilane, methyltributoxysilane, methyltriphenoxysilane, ethyltriethoxysilane, ethyltriisobutoxysilane, ethyltriphenoxysilane, butyltrimethoxysilane, butyltriethoxysilane, butyltributoxysilane, butyltriphenoxysilane, isobutyltriisobutoxysilane, vinyltriethoxysilane, aryltrimethoxysilane, phenyltrimethoxysilane, phenyltriethoxysilane, benzyltriphenoxysilane, methyltriaryloxysilane, dimethyldimethoxysilane, dimethyldiethoxysilane, dimethyldiisopropoxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropoxysilane, dibutyldibutoxysilane, dibutyldiphenoxysilane, diisobutyldiethoxysilane, diisobutyldiisobutoxysilane, diphenyldimethoxysilane, diphenyldiethoxysilane, diphenyldibutoxysilane, dibenzyldiethoxysilane, divinyldiphenoxysilane, diaryldipropoxysilane, diphenyldiaryloxysilane, methylphenyldimethoxysilane, chlorophenyldiethoxysilane.

Examples of the electron donor compound containing a hetero atom are given below. Those which contain a nitrogen atom include 2,2,6,6 - tetramethylpiperidine, 2,6 - dimethylpiperidine, 2,6 - diethylpiperidine, 2,6 - diisopropylpiperidine, 2,6 - diisobutyl - 4 - methylpiperidine, 1,2,2,6,6 - pentamethylpiperidine, 2,2,5,5 - tetramethylpyrrolidine, 2,5 - dimethylpyrrolidine, 2,5 - diethylpyrrolidine, 2,5 - diisopropylpyrrolidine, 1,2,2,5,5 - pentamethylpyrrolidine, 2,2,5 - trimethylpyrrolidine, 2 - methylpyridine, 3 - methylpyridine, 4 - methylpyridine, 2,6 - diisopropylpyridine, 2,6 - diisobutylpyridine, 1,2,4 - trimethylpiperidine, 2,5 - dimethylpiperidine, methyl nicotinate, ethyl nicotinate, nicotinamide, benzoic amide, 2 - methylpyrrole, 2,5 - dimethylpyrrole, imidazole, toluylic amide, benzonitrile, acetonitrile, aniline, paratoluidine, orthotoluidine, methatoluidine, triethylamine, diethylamine, dibutylamine, tetramethylenediamine, and tributylamine. Those which contain a sulfur atom include thiophenol, thiophene, ethyl 2 - thiophenecarboxylate, ethyl 3 - thiophenecarboxylate, 2 - methylthiophene, methylmercaptan, ethylmercaptan, isopropylmercaptan, butyl mercaptan, diethyl thioether, diphenyl thioether, methyl benzenesulfonate, methyl sulfite, and ethyl sulfite. Those which contain an oxygen atom include tetrahydrofuran, 2 - methyltetrahydrofuran, 3 - methyltetrahydrofuran, 2 - ethyltetrahydrofuran, 2,2,5,5 - tetraethyltetrahydrofuran, 2,2,5,5 - tetramethyltetrahydrofuran, 2,2,6,6 - tetraethyltetrahydropyran, 2,2,6,6 - tetrahydropyran, dioxane, dimethyl ether, diethyl ether, dibutyl ether, diisoamyl ether, diphenyl ether, anisole, acetophenone, acetone, methyl ethyl ketone, acetyl acetone, o - tolyl - t - butyl ketone, methyl - 2,6 - di - t - butyl phenyl ketone, ethyl 2-furorate, isoamyl 2-furorate, methyl 2-furorate, and propyl 2-furorate. Those which contain a phosphorus atom include triphenyl phosphine, tributyl phosphine, triphenyl phosphite, tribenzyl phosphite, diethyl phosphate, and diphenyl phosphate.

Two kinds of more of the electron donor compounds may be used. They may be used when the catalyst component is combined with an organometallic compound or used after the contacting with an organometallic compound.

Usually the organometallic compound is used in an amount of 1 to 2000 gram-mol, particularly 20 to 500 gram-mol, per gram-atom of titanium in the catalyst component of this invention.

The amount of the organometallic compound is 0.1 to 40 gram-atom, preferably 1 to 25 gram-atom in terms of aluminum per mol of the electron donor compound.

Polymerization of olefins

The catalyst composed of the catalyst component obtained as mentioned above and an organometallic compound (and an electron donor compound) is useful for homopolymerization of monoolefin having 2 to 10 carbon atoms and copolymerization of a monoolefin having 2 to 10 carbon atoms with another monoolefin or a diolefin having 3 to 10 carbon atoms. It is an outstanding catalyst for homopolymerization of alpha-olefins, particularly $C_3$ to $C_6$ alpha-olefins, such as propylene, 1-butene, 4-methyl-1-pentene, and 1-hexene; and for random and block copolymerization of the above-mentioned alpha-olefins with one another and/or with ethylene.

The polymerization may be performed in either gas phase or liquid phase. The liquid phase polymerization may be accomplished in an inert hydrocarbon such as n-butane, isobutane, n-pentane, isopentane, hexane, heptane, octane, cyclohexane, benzene, toluene, and xylene; or in the liquid monomer. The polymerization temperature is usually −80°C to +150°C, preferably 40 to 120°C. The polymerization pressure is 1.01 to 60.8 bar (1 to 60 atm). The molecular weight modification of the resulting polymer is accomplished by the aid of hydrogen or any known molecular weight modifier present in the system. In the case of copolymerization, the quantity of an olefin to be copolymerized is usually less than 30 wt%, particularly 0.3 to 15 wt%, based on the principal olefin. The polymerization with the catalyst system of this invention may be performed continuously or batchwise under the commonly used conditions. The copolymerization may be accomplished in one step or in two or more steps.

Effect of the invention

The catalyst component of this invention is effective for the production of polyolefins, particularly isotactic polypropylene, ethylene-propylene random copolymers, and ethylene-propylene block copolymers.

The polymerization catalyst containing the catalyst component of this invention has a high

polymerization activity and high stereoregularity and keeps the high activity for a long period at the time of polymerization. In addition, it provides polyolefin powder having a high bulk density and good flowability.

Examples

The invention is now described in more detail with reference to the following examples and application examples, which should not be construed to limit the scope of the invention. Percent (%) in the examples and application examples means wt%, unless otherwise indicated.

The heptane insolubles (abbreviated as HI hereinafter) which indicate the ratio of the crystalline phase in the polymer are the amount of the polymer which remains undissolved when the polymer is extracted with boiling n-heptane for 6 hours in a Soxhlet apparatus of improved type.

Melt flow rate (MFR) was measured according to ASTM D1238, and bulk density was measured according to ASTM D1895-69, method A.

Example 1

Contacting of silicon oxide with n-butylethyl magnesium

In a 200-ml flask equipped with a dropping funnel and stirrer, with the atmosphere therein replaced with nitrogen, were placed 5 g of silicon oxide (abbreviated as $SiO_2$ hereinafter) and 20 ml of n-heptane. (The silicon oxide is G-952, a product of DAVISON, having a specific surface area of 302 $m^2/g$, of pore volume of 1.54 $m^3/g$, and an average pore diameter of 20.4 nanometers (204 Å). Prior to use, it was calcined in a nitrogen stream at 200°C for 5 hours, and then at 700°C for 5 hours.) Further, there was added at room temperature 20 ml of 20% solution of n - butylethylmagnesium (abbreviated as BEM hereinafter) in n-heptane (MAGALA registered Trade Mark BEM, a product of Texas Alkyls, containing 26.8 mmol of BEM), followed by stirring at 90°C for 2 hours. The supernatant liquid was removed by decantation and the resulting solid substance was washed with 50 ml of n-heptane at room temperature. The supernatant liquid was removed by decantation. The washing with n-heptane was repeated four times. A portion of the washed solid substance was dried and analyzed. It was found to contain 5.1% of magnesium.

Contacting with ethanol

The solid substance obtained in the above-mentioned step was suspended in 20 ml of n-heptane. To the resulting suspension was added a solution containing 2.9 g (64 mmol) of ethanol in 10 ml of n-heptane from a dropping funnel at 0°C over 15 minutes. The mixture was stirred at 0°C for 1 hour and then heated to 80°C over 1 hour, and stirring was continued at 80°C for 1 hour. After the reaction was complete, the resulting solid substance was washed with four 50 ml portions of n-heptane at room temperature. The solid substance (designated as solid component I) was found to contain 76.8% of $SiO_2$, 5.0% of magnesium, and 15.8% of ethoxy group. The solid substance was also found to have a specific surface area of 248 $m^2/g$ and a pore volume of 0.74 $cm^3/g$.

Contacting with trichlorosilane

To the solid component I obtained as mentioned above was added 40 ml of n-heptane, and then a solution of 4.4 g (32 mol) of trichlorosilane in 20 ml of n-butane was added dropwise from the dropping funnel over 20 minutes, followed by stirring at 70°C for 6 hours. During this period, the reaction system gave off ethylene gas and ethylchloride gas. The resulting solid substance was filtered out at 70°C and washed by stirring with 50 ml of n-hexane at room temperature for 10 minutes. The supernatant solution was removed by decantation. The washing with n-hexane was repeated four times, and the solid substance was dried under reduced pressure for 1 hour. Thus there was obtained 7.0 g of solid (solid component II). Solid component II was found to contain 4.4% of magnesium, 36.1% of silicon, and 12.8% of chlorine. It was also found to have a specific surface area of 262 $m^2/g$ and a pore volume of 0.79 $cm^3/g$.

Contacting with di-n-butyl phthalate and titanium tetrachloride

To the solid component II obtained in the above-mentioned step were added 28 ml of toluene and 0.4 g of di-n-butyl phthalate, followed by reaction at 50°C for 2 hours. Then 42 ml of titanium tetrachloride was added, followed by reaction at 90°C for 2 hours. The resulting solid substance was washed with eight 50 ml portions of n-hexane at room temperature and dried under reduced pressure at room temperature for 1 hour. There was obtained 6.4 g of catalyst component having a specific surface area of 260 $m^2/g$ and a pore volume of 0.78 $cm^3/g$. The catalyst component was found to contain 77.8% of $SiO_2$, 4.2% of magnesium, 11.6% of chlorine, 1.1% of titanium, and 2.1% of di-n-butyl phthalate.

Example 2

After the contacting with titanium tetrachloride in Example 1, the supernatant liquid was removed by decantation, and the solid substance was washed with 50 ml of toluene at 90°C for 15 minutes. Washing with toluene was repeated. 20 ml of toluene and 42 ml of titanium tetrachloride were added, followed by reaction at 90°C for 2 hours. The resulting substance was washed with n-hexane and dried in the same manner as in Example 1. Thus there was obtained a catalyst component having a specific surface area of 275 $m^2/g$ and a pore volume of 0.81 $cm^3/g$. The catalyst component was found to contain 76.5% of $SiO_2$, 4.5% of magnesium, 12.5% of chlorine, and 1.4% of titanium.

Example 3

A catalyst component containing 1.4% of titanium was prepared in the same manner as in Example 2, except that the contact temperature for titanium tetrachloride was changed from 90°C to 120°C.

Example 4

A catalyst component containing 1.1% of titanium was prepared in the same manner as in Example 2, except that at the time of contacting with di-n-butyl phthalate and titanium tetrachloride, di-n-butyl phthalate and titanium tetrachloride were added simultaneously.

Example 5

A catalyst component containing 1.5% of titanium was prepared in the same manner as in Example 2, except that at the time of contacting with di-n-butyl phthalate and titanium tetrachloride, 42 ml of titanium tetrachloride was added, followed by rapid heating to 90°C with stirring, and then 0.4 g of di-n-butyl phthalate was added, followed by reaction at 90°C for 2 hours.

Example 6

A catalyst component containing 1.7% of titanium was prepared in the same manner as in Example 2, except that BEM was replaced by 13.4 ml of tetrahydrofuran solution (2 mol/liter) of ethylmagnesium chloride.

Example 7

Five grams of solid component I obtained in the same manner as in Example 1 was contacted with 80 ml of toluene and 0.5 g of aluminum trichloride (0.36 mol per 1 gram-atom of magnesium in solid component I) by stirring at 70°C for 2 hours. The resulting solid substance was washed with four 50 ml portions of n-hexane at room temperature. The solid substance was contacted with trichlorosilane, di-n-butyl phthalate, and titanium tetrachloride in the same manner as in Example 2. Thus there was obtained a catalyst component containing 1.4% of titanium.

Example 8

Preparation of magnesium dialkoxide

In a 300-ml glass reactor, with the atmosphere therein replaced with nitrogen, were placed 0.8 g (33 mmol) of magnesium powder, 100 ml of n-heptane, 50 mg of iodine, and 10.4 ml (66 mol) of 2-ethylhexanol, followed by stirring at 145°C for 10 hours. Upon the completion of reaction, there was obtained a colorless transparent viscous solution of magnesium di - 2 - ethylhexyloxide (solution A).

Contacting with $SiO_2$

In a 300-ml glass reactor equipped with a dropping funnel and stirrer, with the atmosphere therein replaced with nitrogen, were placed 5 g of $SiO_2$ (the one used in Example 1) and 20 ml of n-heptane. Then 47 ml (14 mg-atom as magnesium) of solution A obtained in the previous step was added dropwise from the dropping funnel at room temperature, followed by stirring at the reflux temperature for 2 hours.

Contacting with trichlorosilane, di-n-butyl phthalate, and titanium tetrachloride

Contacting with trichlorosilane, di-n-butyl phthalate, and titanium tetrachloride was performed in the same manner as in Example 2. Thus there was obtained a catalyst component containing 1.8% of titanium.

Example 9

In a 300-ml flask equipped with a dropping funnel and stirrer, with the atmosphere therein replaced with nitrogen, were placed 5 g of $SiO_2$ (the one used in Example 1) and 30 ml of methanol solution containing 50 g/liter $Mg(OC_2H_5)_2$, followed by stirring at the reflux temperature for 5 hours. Then methanol was distilled away at 60°C under reduced pressure. The resulting solid substance was contacted with trichlorosilane, di-n-butyl phthalate, and titanium tetrachloride in the same manner as in Example 2. Thus there was obtained a catalyst component containing 1.2% of titanium.

Examples 10 to 15

Example 2 was repeated except that ethanol was replaced by the alcohol or alkoxyl group-containing compound shown below. Thus there were obtained catalyst components each containing titanium as shown below.

| Example | Alcohol or alkoxyl group-containing compound | Titanium content (%) |
|---|---|---|
| 10 | i-Propanol | 1.5 |
| 11 | n-Butanol | 1.3 |
| 12 | 2-Ethylhexanol | 1.7 |
| 13 | Tetraethoxysilane | 1.4 |
| 14 | Ethyl orthoformate | 1.5 |
| 15 | Triethyl borate | 1.6 |

Examples 16 to 18

Example 2 was repeated except that trichlorosilane was replaced by the silicon compound having the hydrogen-silicon bond shown below. Thus there were obtained catalyst components each containing titanium as shown below.

| Example | Silicon compound | Titanium content (%) |
|---|---|---|
| 16 | Methyldichlorosilane | 1.2 |
| 17 | Dimethylchlorosilane | 1.3 |
| 18 | Triethylsilane | 1.4 |

Examples 19 to 22

Example 2 was repeated except that the solid component II was contacted with an electron donor compound shown below in place of di-n-butyl phthalate. Thus there were obtained catalyst components each containing titanium as shown below.

| Example | Electron donor compound | Titanium content (%) |
|---|---|---|
| 19 | Diisobutyl phthalate | 1.8 |
| 20 | Phthalic anhydride | 2.2 |
| 21 | Phthalic acid dichloride | 2.4 |
| 22 | Ethyl benzoate | 1.9 |

Examples 23 and 24

Example 2 was repeated except that $SiO_2$ was replaced by the metal oxide shown below. Thus there were obtained catalyst components each containing titanium as shown below.

| Example | Metal oxide | Conditions of calcination | Titanium content (%) |
|---|---|---|---|
| 23 | $Al_2O_3$ | 200°C/2 hours<br>700°C/5 hours | 1.8 |
| 24 | $(MgO)_2(SiO_2)_3$ | 200°C/2 hours<br>500°C/5 hours | 2.0 |

Examples 25 and 26

Example 2 was repeated except that BEM was replaced by the dihydrocarbyl magnesium shown below. Thus there were obtained catalyst components each containing titanium as shown below.

| Example | Dihydrocarbyl magnesium | Titanium content (%) |
|---|---|---|
| 25 | Di-n-butylmagnesium (0.5 mol)-triethyl aluminum (1 mol) complex, (MAGALA 0.5E, made by Texas Alkyls) | 2.0 |
| 26 | Di-n-butylmagnesium (7.5 mol)-triethyl aluminum (1 mol) complex, (MAGALA 7.5E, made by Texas Alkyls) | 1.9 |

Example 27

Solid component II was reacted with titanium tetrachloride and di-n-butyl phthalate in the same manner as in Example 2 to give a solid substance. This solid substance was washed 8 times with n-hexane and then dispersed in n-hexane to make a slurry (composed of 6.4 g of solid substance and 10 ml of n-hexane) in the same manner as in Example 1. To the slurry was added 50 ml of hexachloroethane, followed by contacting at 50°C for 30 minutes. The resulting solid substance was filtered out at 50°C, followed by washing with four 100 ml portions of n-hexane at room temperature and drying under reduced pressure for 1 hour. Thus there was obtained a catalyst component containing 1.2% of titanium.

Examples 28 to 30

Example 2 was repeated except that contacting with di-n-butyl phthalate and titanium tetrachloride was performed in the following manner. After the first reaction with titanium tetrachloride, the supernatant liquid was removed and 50 ml of toluene and 3 g of silicon tetrachloride were added (in Example 29), 50 ml of toluene and 3 g of aluminum trichloride were added (in Example 30), or 50 ml of toluene and 3 g of hexachloroethane were added (in Example 31), followed by reaction at 60°C for 1 hour. The resulting solid substance was washed with four 50 ml portions of toluene at 60°C, and then 20 ml of toluene and 42 ml of titanium tetrachloride were added for the second reaction with titanium tetrachloride. The resulting solid substance was washed and dried in the same manner as in Example 1. There were obtained catalyst components each containing 1.3% of titanium (Example 28), 1.4% of titanium (Example 29), and 1.3% of titanium (Example 30).

Example 31

Twenty grams of $SiO_2$ (the one used in Example 1) and 6.7 g of commercial $Mg(OC_2H_5)_2$ were pulverized in a mill pot for 24 hours. The resulting pulverized solid substance was contacted with trichlorosilane, di-n-butyl phthalate, and titanium tetrachloride in the same manner as in Example 2 except that solid component I was replaced by this pulverized solid substance. Thus there was obtained a catalyst component containing 2.1% of titanium.

Comparative Example 1

Synthesis of hydrocarbon-soluble organomagnesium component

In a 300-ml flask, with the atmosphere therein replaced with nitrogen, were placed 20 ml of BEM solution (26.8 mmol as BEM) (the one used in Examples 1) and then 20 ml of n-heptane. Subsequently, 0.6 g (13.0 mmol) of ethanol and 1.9 ml (13.3 mmol) of ethyl benzoate were added dropwise at 0°C over 30 minutes, followed by reaction at the same temperature for 10 hours. Thus there was obtained a solution of organomagnesium complex containing 66 mmol of magnesium, 29 mmol of ethoxy group, 94 mmol of Mg-C bond, and 29 mmol of ethyl benzoate in 100 ml.

Preparation of solid catalyst component

In the above-mentioned flask was placed 5.0 g of $SiO_2$ and then a solution containing 3.6 g of trichlorosilane in 20 ml of n-heptane was added dropwise with stirring at 25°C over 1 hour, followed by reaction at the same temperature for 1 hour. The supernatant liquid was removed and the resulting solid was washed with 50 ml of n-heptane at room temperature. The supernatant liquid was discarded. Washing with n-heptane was repeated four times. Then, 60 ml of titanium tetrachloride was added, followed by reaction with stirring at 130°C for 2 hours. The resulting solid substance was washed with eight 60 ml portions of n-hexane at room temperature, followed by drying at room temperature under reduced pressure for 1 hour. Thus there was obtained a solid catalyst containing 2.5% of titanium.

Application Example 1

Into a 1.5-liter stainless steel autoclave equipped with a stirrer was charged under a nitrogen atmosphere a mixture prepared by mixing the following constituents, followed by standing for 5 minutes: (a) 35.0 mg of the catalyst component obtained in Example 1; (b) 4.0 ml of solution containing 0.1 mol of

triethyl aluminum (abbreviated as TEAL hereinafter) in 1 liter of n-heptane; (c) 0.4 ml of solution containing 0.1 mol of phenyltriethoxysilane (abbreviated as PES hereinafter) in 1 liter of n-heptane. Then 300 ml of hydrogen gas a molecular weight modifier and 1 liter of liquefied propylene were forced into the autoclave. The reaction system was heated to 70°C and the polymerization of propylene was carried out for 1 hour. After polymerization was complete, unreacted propylene was purged. There was obtained 112 g of white polypropylene powder having an HI of 96.4%, an MFR of 5.3, and a bulk density of 0.42 g/cm$^3$. [Kc (amount of polymer (g) produced per gram of the catalyst component=3,200, and Kt (amount of polymer (kg) produced per gram of titanium in the catalyst component)=291].

Application Examples 2 to 32

Polymerization of propylene was carried out in the same manner as in Application Example 1, except that the catalyst components obtained in Examples 2 to 31 and Comparative Example 1 were used. The results are shown in Table 1.

Application Example 33

Gas-phase polymerization of propylene

In a 5-liter autoclave equipped with a stirrer was placed 150 g of polypropylene powder which had previously been dried at 90°C for 4 hours in a nitrogen stream. To this autoclave were fed, while running the stirrer at 150 rpm, a catalyst component prepared in Example 3 (50 mg/hour), TEAL (0.7 mmol/hour), PES (0.05 mmol/hour), propylene (130 g/hour), and hydrogen gas (15 ml/hour). Propylene was polymerized continuously under a polymerization temperature of 70°C and a polymerization pressure of 20 kg/cm$^2$, and the polymerization product was discharged continuously. There was obtained polypropylene powder at a rate of 88 g/hour. The polymer had an MFR of 5.3 g/10 min and an HI of 97.0%.

Application Example 34

Block copolymerization of propylene

Into a 1.5-liter autoclave equipped with a stirrer was charged under a nitrogen atmosphere a mixture prepared by mixing the following constituents, followed by standing for 5 minutes: (a) 30.0 mg of the catalyst component obtained in Example 3; (b) 4.4 ml of TEAL solution (0.1 mol/liter) in n-heptane; and (c) 0.44 ml of PES solution (0.1 mol/liter) in n-heptane. Then 300 ml of hydrogen gas and 1 liter of liquefied propylene were forced into the autoclave. The reaction system was heated to 70°C and the homopolymerization of propylene was carried out for 1 hour. (According to the polymerization experiment carried out separately under the same condition, the resulting polypropylene had an HI of 97.2%.) After the polymerization was complete, unreacted propylene was purged and the atmosphere in the autoclave was replaced with nitrogen gas. Then an ethylene-propylene mixture gas [ethylene/propylene=1.5 (molar ratio)] was introduced continuously while keeping the monomer gas pressure at 1.5 atm. Copolymerization was carried out at 70°C for 3 hours. After the polymerization was complete, unreacted mixture gas was purged. Thus there was obtained 174 g of propylene block copolymer.

The ratio of the copolymer portion was calculated at 25.8% on the basis of the consumption of mixture gas and the total amount of polymer produced. The content of ethylene in the total amount of the polymer was 11.9% according to infrared spectrophotometry. This translates into an ethylene content of 46% in the copolymer portion. The amounts of propylene homopolymer and copolymer portion formed per g of catalyst component were 4,300 g and 1,500 g, respectively, which were calculated from the total amount of polymer produced and the consumption of mixture gas. The block copolymer had an MFR of 4.9 g/10 min and a bulk density of 0.42 g/cm$^3$. There was no agglomeration of polymer particles and fouling did not take place at all in the autoclave.

Application Example 35

Random copolymerization of propylene and ethylene

When the polymerization of propylene was carried out as in Application Example 3, 0.6 g each of ethylene was introduced into the autoclave six times at intervals of 10 minutes, whereby random copolymerization of propylene and ethylene was carried out. After the completion of polymerization, unreacted monomers were purged from the polymerization system, and there was obtained 161 g of propylene-ethylene random copolymer. The copolymer was found to contain 2.5% of ethylene according to infrared spectrophotometry. The amount of the copolymer formed per g of catalyst component were 4,600 g. The block copolymer had an MFR of 11.1 g/10 min and a bulk density of 0.40 g/cm$^3$.

Application Example 36

Polymerization of 1-butene

Polymerization of 1-butene was performed in the same manner as in Application Example 1 except that 96.7 mg of catalyst component obtained in Example 3 was used, 400 ml of isobutane was used as a medium, liquefied propylene was replaced by 400 ml of 1-butene (liquid), the polymerization temperature was 40°C, and the polymerization time was 5 hours. There was obtained 148 g of powder poly-1-butene. Kc was 1,530 g/g-catalyst component. The polymer had an MFR of 2.0 g/10 min and a bulk density of 0.40

g/cm³. The amount of ether insolubles (residues remaining after extraction with boiling diethyl ether for 5 hours) was 99.0%.

Application Example 37
Polymerization of 4-methyl-1-pentene

Polymerization of 4-methyl-1-pentene was performed in the same manner as in Application Example 1 except that 100 mg of catalyst component obtained in Example 3 was used, propylene was replaced by 400 ml of 4-methyl-1-pentene, and the polymerization time was 6 hours. There was obtained 125 g of powder poly-4-methyl-1-pentene. Kc was 1,250 g/g-catalyst component. The polymer had an MFR of 3.6 g/10 min, a bulk density of 0.36 g/cm³, and an HI of 96.5%.

TABLE 1

| Application Example | Catalyst component | Kc (g/g · cat) | Kt (kg/g · Ti) | HI (%) | MFR (g/10 min) | Bulk density (g/cm³) |
|---|---|---|---|---|---|---|
| 2 | Example 2 | 3,800 | 271 | 96.8 | 5.8 | 0.43 |
| 3 | Example 3 | 4,300 | 307 | 97.2 | 5.0 | 0.44 |
| 4 | Example 4 | 4,100 | 373 | 97.0 | 5.1 | 0.42 |
| 5 | Example 5 | 4,100 | 273 | 97.4 | 5.1 | 0.42 |
| 6 | Example 6 | 3,000 | 176 | 96.9 | 5.7 | 0.42 |
| 7 | Example 7 | 3,300 | 236 | 96.7 | 6.2 | 0.40 |
| 8 | Example 8 | 2,900 | 161 | 96.5 | 5.9 | 0.40 |
| 9 | Example 9 | 2,500 | 208 | 96.7 | 4.9 | 0.42 |
| 10 | Example 10 | 3,800 | 253 | 97.1 | 5.2 | 0.42 |
| 11 | Example 11 | 4,100 | 315 | 97.3 | 5.5 | 0.44 |
| 12 | Example 12 | 3,900 | 229 | 97.0 | 5.4 | 0.43 |
| 13 | Example 13 | 4,400 | 314 | 97.3 | 5.9 | 0.44 |
| 14 | Example 14 | 3,700 | 247 | 97.0 | 6.1 | 0.43 |
| 15 | Example 15 | 3,700 | 231 | 96.7 | 6.0 | 0.43 |
| 16 | Example 16 | 3,900 | 325 | 96.8 | 5.8 | 0.42 |
| 17 | Example 17 | 3,900 | 300 | 96.9 | 5.4 | 0.41 |
| 18 | Example 18 | 3,200 | 229 | 96.6 | 5.4 | 0.42 |
| 19 | Example 19 | 4,000 | 222 | 96.9 | 5.8 | 0.42 |
| 20 | Example 20 | 3,200 | 145 | 96.5 | 5.1 | 0.41 |
| 21 | Example 21 | 3,400 | 142 | 96.5 | 5.2 | 0.40 |
| 22 | Example 22 | 3,000 | 158 | 96.4 | 5.5 | 0.42 |
| 23 | Example 23 | 3,100 | 172 | 96.5 | 5.4 | 0.39 |
| 24 | Example 24 | 3,000 | 150 | 96.2 | 5.9 | 0.39 |
| 25 | Example 25 | 3,400 | 170 | 96.5 | 5.0 | 0.41 |
| 26 | Example 26 | 3,200 | 168 | 96.4 | 5.9 | 0.41 |

TABLE 1 (contd.)

| Application Example | Catalyst component | Kc (g/g · cat) | Kt (kg/g · Ti) | HI (%) | MFR (g/10 min) | Bulk density (g/cm$^3$) |
|---|---|---|---|---|---|---|
| 27 | Example 27 | 3,900 | 325 | 97.4 | 5.2 | 0.43 |
| 28 | Example 28 | 4,000 | 308 | 96.9 | 5.2 | 0.42 |
| 29 | Example 29 | 4,000 | 286 | 97.0 | 5.5 | 0.41 |
| 30 | Example 30 | 4,200 | 323 | 96.8 | 5.4 | 0.41 |
| 31 | Example 31 | 3,900 | 186 | 97.0 | 6.2 | 0.35 |
| 32 | Comparative Example 1 | 1,410 | 56 | 91.8 | 8.5 | 0.35 |

**Claims**

1. A supported titanium-containing catalyst component obtained by contacting (A) a metal oxide, (B) a magesium hydrocarbyloxide, represented by the formula

$$Mg(OR^1)_p(OR^2)_qR^3{}_rR^4{}_sX_t,$$

wherein $R^1$, $R^2$, $R^3$, and $R^4$ are the same or different alkyl, alkenyl, cycloalkyl, aryl, or aralkyl groups having from 1 to 20 carbon atoms, X is a halogen atom, p or q are greater than 0 and p+q+r+s+t=2, (C) a silicon compound represented by the formula $H_mR_nSiX_r$, wherein R is a hydrocarbon group, R'O—, R'' R'''N— or R''''COO—, wherein R, R', R'', and R''' are hydrocarbon groups and R'''' is a hydrogen atom or a hydrocarbon group, X is a halogen atom, m is an integer of 1 to 3, $0 \leq r < 4$, and m+n+r=4, (D) an electron donor compound, and (E) a di, tri or tetravalent titanium compound with one another, the contacting being accomplished either simultaneously or by simultaneously contacting (A)(B)(C) and (D) first followed by contacting with (E), or by simultaneously contacting (A)(B) and (C) first followed by contacting with (D) and (E) simultaneously or individually, or by contacting (A) and (B) first followed by contacting with (C) and after that contacting with (D) and (E) simultaneously or individually.

2. The supported titanium-containing catalyst component of claim 1 wherein the (A) metal oxide is selected from the group of elements in Groups II to IV of the Periodic Table, (C) n is an integer of 0 to 2 and r is an integer of 1 to 3 in the silicon compound, the (D) electron donor compound is selected from carboxylic acids, carboxylic acid anhydrides, carboxylic acid esters, carboxylic acid halides, alcohols, and ethers, and the (E) titanium compund is $TiCl_4$.

3. The supported titanium-containing catalyst component of claim 1 wherein the (A) metal oxide is contacted with the (B) magnesium hydrocarbyloxide at a temperature in the range of −20°C to 150°C for 0.1 to 100 hours to obtain contact product (a); contact product (a) is contacted with the (C) silicon compound at a temperature in the range of about 0 to about 200°C for about 0.5 to about 100 hours to yield contact product (b); contact product (b) is contacted with the (D) electron donor compound and (E) titanium compound in any order or simultaneously.

4. The supported titanium-containing catalyst component in accordance with claim 2 wherein the silicon compound is trichlorosilane.

5. A catalyst system comprising (I) a catalyst component according to any of the preceding claims, and (II) an organic compound of a metal of Groups I to III of the Periodic Table.

6. The catalyst system in accordance with claim 5 further comprising (III) an electron donor compound.

7. A process for the polymerization or copolymerization of olefins which comprises contacting one or more olefins with a catalyst system according to claims 5 or 6.

8. The process in accordance with claim 7 wherein the olefin is propylene.

**Patentansprüche**

1. Geträgerte titanhaltige Katalysatorkomponente, erhalten durch in Kontakt bringen von:
(A) einem Metalloxid,
(B) einem Magnesiumhydrocarbyloxid entsprechend der Formel

$$Mg(OR^1)_p(OR^2)_qR^3{}_rR^4{}_sX_t,$$

in der $R^1$, $R^2$, $R^3$ und $R^4$ gleiche oder verschiedene Alkyl-, Alkenyl-, Cycloalkyl-, Aryl- oder Aralkylgruppen mit 1 bis 20 Kohlenstoffatomen sind, X ein Halogenatom ist, p oder q größer als 0 ist und p+q+r+s+t=2,
(C) einer Siliziumverbindung entsprechend der Formel $H_mR_nSiX_r$, in der R eine Kohlenwasserstoffgruppe, R'O—, R'' R'''N— oder R''''COO— ist, in der R, R', R'' und R''' Kohlenwasserstoffgruppen sind und R'''' ein Wasserstoffatom oder eine Kohlenwasserstoffgruppe ist, X ein Halogenatom ist, m eine ganze Zahl von 1 bis 3 ist, $0 \leq r < 4$ und $m+n+r=4$,

(D) einer Elektronendonorverbindung, und

(E) einer di-, tri- oder tetravalenten Titanverbindung, wobei das Inkontaktbringen entweder gleichzeitig oder zuerst durch gleichzeitiges Inkontaktbringen von (A) (B) (C) und (D), gefolgt vom Inkontaktbringen mit (E), oder zuerst durch gleichzeitiges Inkontaktbringen von (A) (B) und (C), gefolgt vom Inkontaktbringen mit (D) und (E) gleichzeitig oder einzeln, oder zuerst durch Inkontaktbringen von (A) und (B), gefolgt vom Inkontaktbringen mit (C) und nach diesem Kontaktschritt mit (D) und (E) gleichzeitig oder einzeln, durchgeführt wird.

2. Geträgerte titanhaltige Katalysatorkomponente nach Anspruch 1, worin das Metalloxid (A) aus der Gruppe der Elemente der Gruppen II bis IV des Periodischen Systems ausgewählt ist, n in (C) eine ganze Zahl von 0 bis 2 und r eine ganze Zahl von 1 bis 3 in der Siliziumverbindung ist, die Elektronendonorverbindung (D) aus Carbonsäuren, Carbonsäureanhydriden, Carbonsäureestern, Carbonsäurehalogeniden, Alkoholen und Ethern ausgewählt ist und die Titanverbindung (E) $TiCl_4$ ist.

3. Geträgerte titanhaltige Katalysatorkomponente nach Anspruch 1, worin das Metalloxid (A) mit dem Magnesiumhydrocarboxyloxid (B) bei einer Temperatur im Bereich von −20°C bis 150°C für 0,1 bis 100 Stunden in Kontakt gebracht wird, um das Kontaktprodukt (a) zu erhalten; das Kontaktprodukt (a) mit der Siliziumverbindung (C) bei einer Temperatur im Bereich von etwa 0 bis etwa 200°C für etwa 0,5 bis etwa 100 Stunden in Kontakt gebracht wird, um das Kontaktprodukt (b) zu ergeben; das Kontaktprodukt (b) mit der Elektronendonorverbindung (D) und der Titanverbindung (E) in jeder Reihenfolge oder gleichzeitig in Kontakt gebracht wird.

4. Geträgerte titanhaltige Katalysatorkomponente nach Anspruch 2, worin die Siliziumverbindung Trichlorsilan ist.

5. Katalysatorsystem, enthaltend (I) eine Katalysatorkomponente nach einem der vorhergehenden Ansprüche und (II) eine organische Verbindung eines Metalls der Gruppen I bis III des Periodischen Systems.

6. Katalysatorsystem nach Anspruch 5, weiterhin enthaltend (III) eine Elektronendonorverbindung.

7. Verfahren zur Polymerisation oder Copolymerisation von Olefinen, bei dem man eines oder mehrere Olefine mit einem Katalysatorsystem nach Anspruch 5 oder 6 in Kontakt bringt.

8. Verfahren nach Anspruch 7, bei dem das Olefin Propylen ist.

**Revendications**

1. Composant de catalyseur contenant du titane fixé sur un support, obtenu par mise en contact (A) d'un oxyde métallique, (B) d'un hydrocarbylate de magnésium représenté par la formule

$$Mg(OR^1)_p(OR^2)_qR^3_rR^4_sX_t$$

dans laquelle $R^1$, $R^2$, $R^3$ et $R^4$ sont des groupes alkyle, alcényle, cycloalkyle, aryle ou aralkyle identiques ou différents ayant 1 à 20 atomes de carbone, X est un atome d'halogène, p ou q ont des valeurs supérieures à 0 et la somme $p+q+r+s+t$ est égale à 2, (C) d'un composé de silicium représenté par la formule $H_mR_nSiX_r$ dans laquelle R est un groupe hydrocarboné, R'O—, R''R'''N— ou R''''COO—, où R, R', R'' et R''' sont des groupes hydrocarbonés et R'''' est un atome d'hydrogène ou un groupe hydrocarboné, X est un atome d'halogène, m est un nombre entier de 1 à 3, r va d'une valeur supérieure ou égale à 0 à une valeur inférieure à 4 et la somme $m+n+r$ est égale à 4, (D) d'un composé donneur d'électrons et (E) d'un composé de titane divalent, trivalent ou tétravalent, les uns avec les autres, la mise en contact étant accomplie simultanément ou par mise en contact simultanée de (A) (B (C) et (D) tout d'abord, suivie de la mise en contact avec (E) ou par mise en contact simultanée de (A) (B) et (C) tout d'abord, suivie de la mise en contact avec (D) et (E) simultanément ou individuellement, ou par mise en contact de (A) et (B) tout d'abord, suivie de la mise en contact avec (C), puis de la mise en contact avec (D) et (E) simultanément ou individuellement.

2. Composant du catalyseur contenant du titane fixé sur un support suivant la revendication 1, dans lequel l'oxyde métallique (A) est choisi parmi des éléments des Groupes II à IV du Tableau Périodique, (C) n est un nombre entier de 0 à 2 et r est un nombre entier de 1 à 3 dans le composé de silicium, le composé donneur d'électrons (D) est choisi entre des acides carboxyliques, des anhydrides acides carboxyliques, des esters d'acides carboxyliques, des halogénures d'acides carboxyliques, des alcools et des éthers, et le composé de titane (E) est $TiCl_4$.

3. Composant de catalyseur contenant du titane fixé sur un support suivant la revendication 1, dans lequel l'oxyde métallique (A) est mis en contact avec l'hydrocarbylate de magnésium (B) à une température comprise dans l'intervalle de −20 à 150°C pendant 0,1 à 100 heures de manière à former le produit de contact (a); le produit de contact (a) est mis en contact avec le composé de silicium (C) à une température comprise dans l'intervalle d'environ 0 à environ 200°C pendant environ 0,5 à environ 100 heures pour former le produit de contact (b); le produit de contact (b) est mis en contact avec le composé donneur d'électrons (D) et le composé de titane (E) dans un ordre quelconque ou simultanément.

4. Composant de catalyseur contenant du titane fixé sur un support suivant la revendication 2, dans lequel le composé de silicium est le trichlorosilane.

5. Composition de catalyseur, comprenant (I) un composant de catalyseur suivant l'une quelconque des revendications précédentes et (II) un composé organique d'un métal des Groupes I à III du Tableau Périodique.

6. Composition de catalyseur suivant la revendication 5, comprenant en outre (III) un composé donneur d'électrons.

7. Procédé de polymérisation ou de copolymérisation d'oléfines, qui consiste à faire entrer en contact une ou plusieurs oléfines avec une composition de catalyseur suivant les revendications 5 ou 6.

8. Procédé suivant la revendication 7, dans lequel l'oléfine est le propylène.